# EUROPEAN PATENT SPECIFICATION

(11) **EP 4 361 581 B1**
(45) Date of publication and mention of the grant of the patent: **26.11.2025**
(21) Application number: 23202293.9
(22) Date of filing: 09.10.2023
(51) Int. Cl.: G01G 13/28, A47F 1/035, B65B 37/02, B65B 37/08, B65B 37/18, B65G 65/48, G01G 13/18

(54) **METERED FOOD DISPENSER WITH BI-DIRECTIONAL DISPENSING DRUM MOVEMENT TO REDUCE PRODUCT BRIDGING**
LEBENSMITTELDOSIERSPENDER MIT BIDIREKTIONALER AUSGABETROMMELBEWEGUNG ZUR REDUZIERUNG VON PRODUKTBRÜCKEN
DOSEUR D'ALIMENTS AVEC MOUVEMENT DE TAMBOUR DE DISTRIBUTION BIDIRECTIONNEL POUR RÉDUIRE LE PONTAGE DU PRODUIT

(30) Priority: 31.10.2022 US 202263420784 P
(43) Date of publication of application: 01.05.2024
(73) Proprietor: Franke Technology and Trademark Ltd, 6052 Hergiswil (CH)
(72) Inventor: Chmayssani, Khalil, Nolensville, 37135 (US); Fernandez, Omar, Mt. Juliet, 37122 (US)
(74) Representative: LBP Lemcke, Brommer & Partner Patentanwälte mbB

(56) References cited:
- US-A1- 2001 040 170
- US-B2- 11 142 412

## Description

### TECHNICAL FIELD

The present invention relates to the field of metered food dispensers that dispense a metered quantity of food product from a hopper. More particularly, the invention relates to a dispenser for frozen food, which can be, for example, French fries, that are dispensed from a bulk storage hopper in metered batch sizes to a fry basket.

### BACKGROUND

Applicant has developed and markets metered food dispensers, particularly for frozen foods such as French fries or chicken nuggets, that dispense bulk food product from a storage hopper into a receptacle, such as a fry basket. The frozen food is dispensed in specific metered quantities as the amount of the frozen food that is dispensed at one time can affect quality of the finished (cooked) food product, for example, based on the temperature change imparted by the food product to the cooking oil as well as the necessary fry time in the cooking oil. Currently, the frozen food product is removed from a bottom of the storage hopper via a rotating drum having paddles or fins on a periphery thereof by rotating the drum so that the food product that is released/displaced by the paddles fall onto a weighing/dispensing assembly. When the appropriate weight of food product is detected by the weighing/dispensing assembly, the rotation of the drum stops, and the accumulated food product that was dispensed onto the weighing/dispensing assembly is delivered to the receptacle, for example, the fry basket, by opening one or more dump doors on which the product accumulates.

In the known equipment, the drum rotates at a constant speed in one direction during each dispensing operation and, in particular for frozen French fries, stops when the amount of the food product is within 10% of the desired target weight The accumulated food product is then dispensed.

One issue in the known dispenser is product bridging, particularly where the dispenser is for frozen foods and the frozen product clumps together creating a dam-like occurrence at the bottom of the storage hopper. This can prevent product from dispensing. The frozen product can also be clumped together which would keep the product from dispensing. This can result in an error message being displayed by the dispensing unit. The user/restaurant worker would then have to clear all product out of the hopper to dislodge the jam or product bridge. Many times, the food then needs to be disposed of. If the issue cannot be resolved, then a technician would be called out to resolve the issue.

A product dispenser for frozen food products in accordance with the preamble of claim 1 is also described in US2001040170A1.

A dispenser with two counter rotating dispensing vanes is shown in US11142412B2. The respective directions of rotation of the vanes can be reversed when the ingredients in the hopper of the dispenser unit become clogged. This will reverse the conveying direction of the dispenser unit in an attempt to thereby unclog the ingredients in the hopper.

Although the known arrangement has been very successful in operation, it would be desirable to improve the function and reliability of the system to avoid in particular these types of product clumping or bridging issues.

### SUMMARY

The present disclosure is directed to a product dispenser, preferably for frozen food product such as French fries, having a storage hopper, a rotatable drum having paddles on a periphery thereof located at a bottom of the storage hopper, and a drive motor connected to the rotatable drum. Rotation of the drum causes the paddles to engage with and move product from the open bottom of the hopper to a position in the drum housing where the product can then fall through the open bottom of the drum housing. A weighing/dispensing assembly is located beneath the rotatable drum and includes a load cell and further includes or is connected to one or more dump doors on which product to be dispensed is adapted to accumulate. A controller is provided and is configured to: a) actuate the drive motor to rotate the rotatable drum in a rotational direction at a start of a dispensing cycle, b) receive a signal from the load cell and determine a weight of the product accumulating on the one or more dump doors, c) determine if a target weight is reached based on the signal from the load cell of the weight of the product accumulating on the one or more dump doors, d) deactivate the drive motor upon the target weight being detected, e) open the one or more dump doors such that accumulated product is dispensed, f) upon a start of a next dispensing cycle, actuate the drive motor to rotate the rotatable drum in a rotational direction, opposite to the rotational direction of the drive motor in step d) of the prior dispensing cycle, and g) repeat steps b) - e). With this feature, the rotational drum would rotate in opposite directions on alternating dispensing cycles to help break up any potential product jamming or product bridge before it occurs, reducing the likelihood of the restaurant or other user having to shut down the product dispenser and try to clear the jam or product bridge and/or having to call for Technical Support, avoiding the potential down time for the dispenser and potential loss of product.

In another aspect, the controller is further configured to: a1) detect a current to the drive motor, and a2) if the current draw to the drive motor exceeds a pre-set limit, reverse the rotational direction of the drive motor and the rotatable drum connected thereto. Any jam causes a current spike to the drive motor as the load transferred back from the rotatable drum (which is jammed and therefore not rotating) to the drive motor increases. By the controller reversing the rotational direction of the drive motor and the rotatable drum when such a current spike is detected, there is a high probability of clearing the jam using this reverse rotational logic from the controller. This allows product dispensing to continue basically uninterrupted from the user perspective.

In a further refinement, the controller is further configured to: a3) detect a reverse rotational direction current to the drive motor, and a4) if the reverse rotational direction current to the drive motor exceeds a pre-set limit, signal a display to show an error message. At this point if there is a current spike to the drive motor in both rotational directions, user attention is needed. Preferably, the controller also deactivates the drive motor in step a4) to prevent any damage to the dispensing equipment.

In another aspect, the controller is further configured to: a5) determine a reverse run time for step a2), and a6) if the reverse run time exceeds a preset limit (prior to the target weight being reached), reverse the rotational direction of the drive motor to rotate the rotatable drum in an opposite rotational direction from step a2). In this case, as there is no current spike to the drive motor, reversing the rotational direction again can help to break-up product bridging.

Here again with the rotation back to the original rotational direction for a given dispensing cycle, the controller is preferably further configured to: detect the current to the drive motor, and a7) if the current to the drive motor exceeds a pre-set limit, signal a display to show an error message. Preferably, the controller also deactivates the drive motor in step a7) to prevent any damage to the dispensing equipment.

Having the product dispenser with the controller configured to operate in this manner with changes in the rotational direction of the rotatable drum with alternate dispensing cycles re-distributes product at a bottom of the storage hopper that is in contact with a top of the rotatable drum. This helps to prevent jams and product bridging, which is particularly important for frozen food products being dispensed, such as French fries where bridging and clumping of the product is common.

Further, by sensing the current draw by the drive motor and reversing the drive direction within a single dispensing cycle, any jamming that does occur can in many cases be cleared automatically by the product dispenser itself without the need for user intervention and the associated down time and potential loss of product..

The various features noted above can be used alone or in various combinations to provide for metered dispensing of products, and in particular frozen food products, in an accurate manner with reduced propensity for product bridging or product jamming.

### BRIEF DESCRIPTION OF THE DRAWINGS

Further advantages and characteristics of the invention will become apparent by the below description of embodiments making reference to the accompanying drawings, in which:
Figure 1 is a perspective view of a prior art product dispenser of the assignee of the general type referenced herein.
Figure 2 is a partial perspective view of the prior art product dispenser shown in Figure 1 illustrating two food storage hoppers with an arrow indicating where food is filed into the first hopper.
Figure 3 is a partial perspective view of the prior art product dispenser according to Figure 1 in which the two food hoppers shown in Figures 1 and 2 have been removed in order to provide a view of the rotatable drums with paddles or fins as well as associated drive motors that are individually activatable to rotate the drum associated with a specific hopper in order to remove food product from the open bottom end of the hopper and deliver the food product via an opening at the bottom of the drum housing to a respective weighing/dispensing assembly.
Figure 4 is an exploded assembly view in perspective showing a portion of one weighing/dispensing assembly in accordance with the prior art product dispenser shown in Figures 1-3 showing a dump door motor and gear box assembly used to actuate the dump doors, as well as a support assembly lift motor and gear box assembly used to lift a support assembly into and out of contact with a load cell, with the motor and gearbox assemblies being assembled to a mounting plate and/or a movable support assembly located thereon.
Figure 5 is a an exploded similar to Figure 4 in which additional components, including the rotatable shafts with associated dump doors as well as the levers and linkages that are acted upon by the dump door motor and gear box to discharge product from the dump doors are now shown.
Figure 6 is a schematic diagram showing a product dispenser in accordance with the present invention.
Figure 7 is a flow diagram showing exemplary controller logic for the controller used in the product dispenser shown in Figure 6.

### DETAILED DESCRIPTION

Certain terminology is used in the following description for convenience only and is not limiting. The words "right," "left," "top," and "bottom" designate directions in the drawings to which reference is made. The words "a" and "one," as used in the claims and in the corresponding portions of the specification, are defined as including one or more of the referenced item unless specifically stated otherwise. This terminology includes the words above specifically mentioned, derivatives thereof, and words of similar import. The phrase "at least one" followed by a list of two or more items, such as "A, B, or C," means any individual one of A, B or C as well as any combination thereof. The terms approximately or generally mean within +/-10% of a specified value unless otherwise noted, and within +/- 25° of a specified angle or direction.

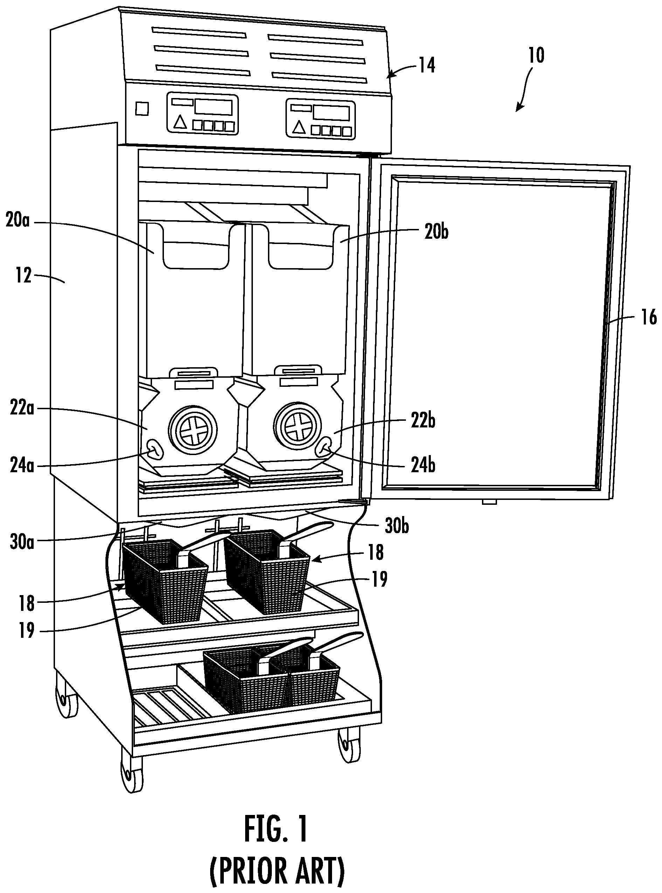

Referring to Figures 1-5, a prior art product dispenser 10, in particular a dispenser for frozen food such as French fries or chicken nuggets, is shown. The product dispenser 10 includes a housing 12 with a refrigeration unit 14 located on top of the housing 12 as well as an access door 16 to the refrigerated portion of the product dispenser 10. Product receiving spaces 18 are located beneath the enclosed area and are configured to receive a receptacle, such as a fry basket 19, into which a metered amount of product is to be dispensed.

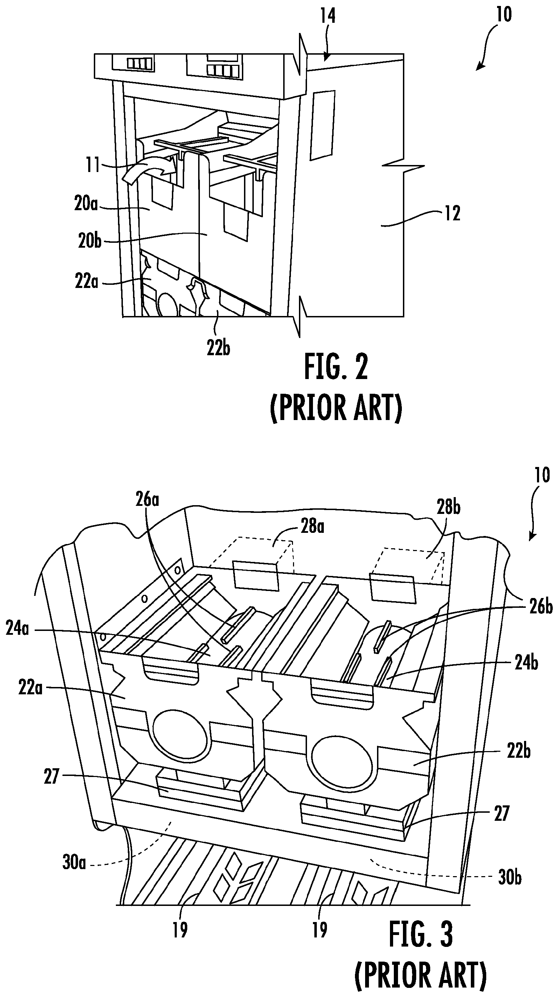

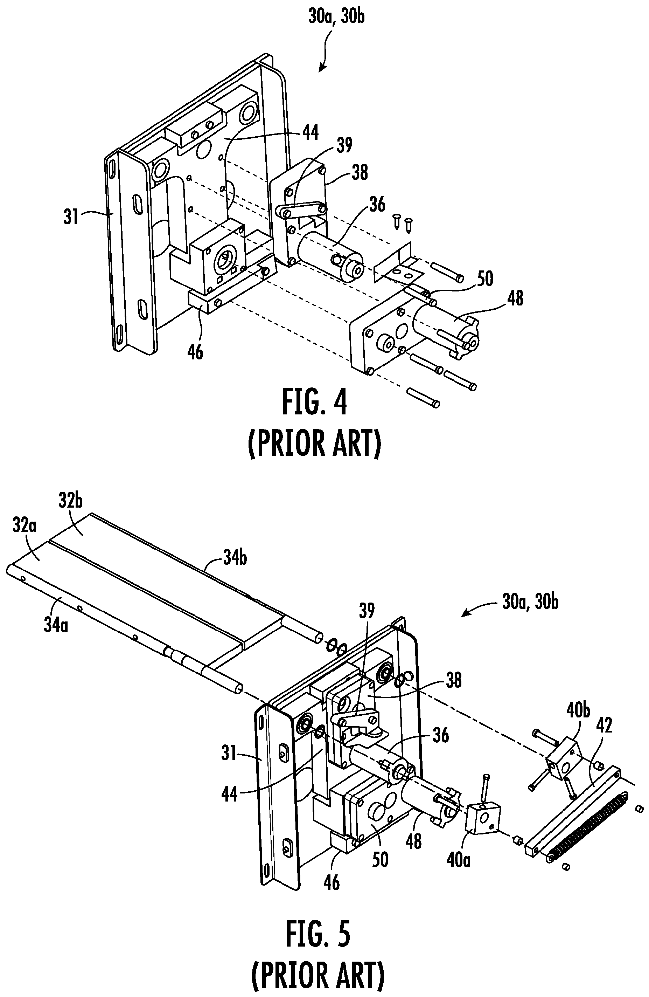

Still with reference to Figures 1-3, hoppers 20a, 20b are located within the refrigerated area and are assembled on top of drum housings 22a, 22b. Frozen food product (indicated by arrow 11 in Fig. 2) can be loaded into the hoppers 20a, 20b for metered dispensing. As shown in detail in Figure 3, rotatable drums 24a, 24b are located within the respective drum housings 22a, 22b. Flexible paddles or fins (these terms are used interchangeably herein) 26a, 26b are located on the rotatable drums 24a, 24b. Drive motors 28a, 28b, shown schematically, are individually activatable to rotate the respective associated rotatable drum 24a, 24b in order to move product from the open bottom end of the desired associated hopper 20a, 20b into the respective drum housings 22a, 22b so that the product can drop down on to the respective weighing/dispensing assembly 30a, 30b. These are indicated in their respective positions in Figures 1 and 3, and an exemplary arrangement is shown in detail in Figures 4 and 5. Boots 27 shown in Fig. 3 guide the food product 11 from the open bottom of the drum housings 22a, 22b to the weighing/dispensing assemblies 30a, 30b.

As shown in Figs. 4 and 5, the weighing/dispensing assemblies 30a, 30b may each include a mounting plate 31 that is connected to the housing 12. A support assembly 44 is slidably connected to the mounting plate 31 for up and down movement. Rotatable shafts 34a, 34b are rotatably supported in the support assembly 44 and respective dump doors 32a, 32b are connected to the respective rotatable shafts 34a, 34b. A dump motor 36 is mounted on the support assembly 44 and includes a dump motor gear box 38 that is connected to an actuator arm 39 that, upon activation of the dump door motor 36, is rotated into contact with a first dump door drive lever 40a, which can be connected via a linkage arm 42 to a second dump door drive lever 40b in order to activate and open the dump doors 32a, 32b. This is done when a specific product weight is accumulated on the dump doors 32a, 32b based on rotation of an associated one of the rotatable drums 24a, 24b moving product from the bottom of a respective one of the hoppers 28a, 28b so it falls through the respective drum housing 22a, 22b, onto the respective closed dump doors 32a, 32b.

In order to detect the weight of the product accumulated on the dump doors 32a, 32b, a load cell 46 is provided and is in contact with the support assembly 44 as the food product is accumulated on the dump doors 32a, 32b while the rotatable drum 24a or 24b is rotated by the respective drive motor 28a or 28b. Once the load cell 46 detects that the desired amount of food product is located on the dump doors 32a, 32b, rotation of the rotatable drum 24a or 24b is stopped and the dump door motor 36 is activated in order to open the dump doors 32a, 32b. In order to move the support assembly 44 out of contact with the load cell 46, a support assembly lift motor 48 is provided and is connected to a support assembly lift gear box 50. The support assembly lift motor 48 is activated in order to raise the support assembly 44 out of contact with the load cell 46 when the dispensing cycle is completed so that the load cell 46 is not loaded until a next dispensing cycle is initiated and the support assembly lift motor is activated to move the support assembly 44 into contact with the load cell 46.

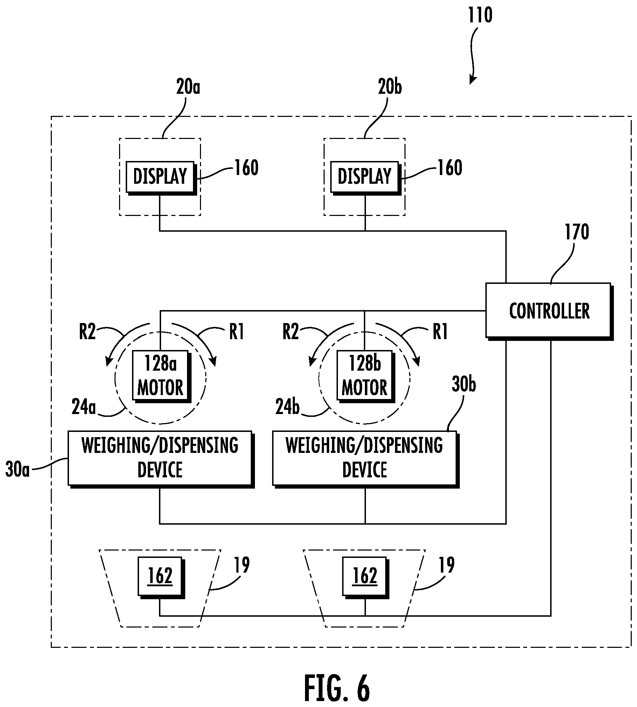

Referring to Figures 6-7, a product dispenser 110 in accordance with the present disclosure having the improved features discussed herein is described in detail. The product dispenser 110 is similar to the product dispenser 10 and includes the housing 12, refrigeration unit 14 as well as the access door 16 and fry basket receiving spaces 18 in which fry baskets or other receptacles 19 for dispensed product can be positioned, as described above. Additionally, the hoppers 20a, 20b as well as the drum housings 22a, 22b and rotatable drums 24a, 24b are provided as described above in connection with the product dispenser 10. Drive motors 128a, 128b similar to the drive motors 28a, 28b described above, but drivable in in first and second rotational directions R1, R2 (indicated in Fig. 6) for driving the rotatable drums 24a, 24b in both directions are also provided and are used to drive the respective rotatable drums 24a, 24b to engage with and move food product from the open bottom of a respective hopper 20a or 20b to a position in the drum housing 22a, 22b where the food product can then fall through the open bottom of the drum housing 22a, 22b. Additionally, weighing/dispensing assemblies 30a, 30b are used as described above to receive and weigh the product to be dispensed. Other types of weighing/dispensing assemblies could be utilized that include at least a load cell to determine a weight of product being accumulated prior to being dispensed, and a dispensing mechanism which can include, for example, one or more dump doors, a tilt tray, a sweep arm or any other means for moving product off of the weighing assembly and into the receptacle 19 for the dispensed product. While the product dispenser 110 is also described with two dispensing arrangements similar to that shown in Figure 1, it could also be one dispensing arrangement (one hopper, one rotatable drum, and one weighing/dispensing mechanism) or include more than two dispensing arrangements.

As shown schematically in Figure 6, the product dispenser 110 includes a controller 170, preferably including a processor and memory, that is programmed and configured to: a) actuate the drive motor 128a or 128b to rotate the rotatable drum 24a or 24b in a rotational direction R1 or R2 at a start of a dispensing cycle, b) receive a signal from the load cell 46 and determine a weight of the product accumulating on the one or more dump doors 32a, 32b, c) determine if a target weight is reached based on the signal from the load cell 46 of the weight of the product accumulating on the one or more dump doors 32a, 32b, d) deactivate the drive motor 128a or 128b upon the target weight being detected e) open the one or more dump doors 32a, 32b such that accumulated product is dispensed, f) upon a start of a next dispensing cycle, actuate the drive motor 128a or 128b to rotate the rotatable drum 24a, 24b in a rotational direction R2 or R1 opposite to the rotational direction R1 or R2 of the drive motor 128a or 128b when it is deactivated in step d), and g) repeat steps b) - e) for the next dispensing cycle.

Here, to the extent that the rotational direction was in a first direction R1 during a previous dispensing cycle (and preferably at the end of that dispensing cycle), the rotational direction of the drive motor would change to the opposite rotational direction such that the rotational direction of the drum 24a is in the second rotational direction R2 in the following dispensing cycle. Using the controller 170 in this manner such that the rotational drum 24a or 24b rotates in the opposite direction on alternating dispensing cycles helps to break up any potential product jamming or product bridge at the open bottom end of the hopper 20a or 20b located at the top of each rotating drum 24a, 24b, respectively.

Further, as shown in Figure 6, preferably a receptacle sensor 162 that is configured to detect a receptacle 19 being placed into a receiving space 18 under the one or more dump doors 32a, 32b is provided. The receptacle sensor 162 signals the controller 170 which is configured to initiate the dispensing cycle upon the receptacle 19 being detected. The sensor 162 can be, for example, a proximity sensor, break beam sensor, or any other suitable type of sensor that detects the presence of a receptacle in a specific area beneath the one or more dump doors 32a, 32b for each dispensing arrangement.

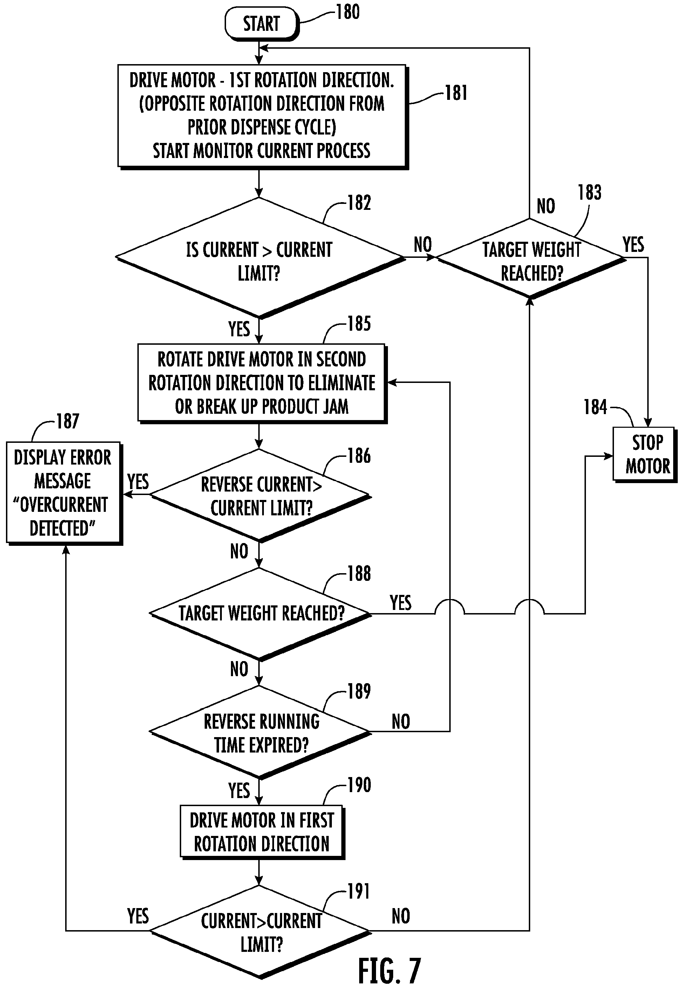

Still with reference to Figures 6 and 7, preferably the controller 170 is further configured to: a1) detect a current to the drive motor 128a or 128b, and a2) if the current to the drive motor 128a, 128b exceeds a pre-set limit, to reverse the rotational direction R1 or R2 of the drive motor 128a or 128b and the associated rotatably drum 24a, 24b. Here, to the extent that the rotational direction was in a first direction R1 during a dispensing cycle, the rotational direction of the drive motor would change to the opposite rotational direction mid-dispensing cycle such that the rotational direction of the drum 24a is in the second rotational direction R2 in order to attempt to dislodge or break-up a jam.

Further, in a preferred embodiment the controller 170 is configured to: a3) detect a reverse rotational direction current to the drive motor 128a or 128b, and a4) if the reverse rotational direction current to the drive motor 128a or 128b exceeds a pre-set limit, signal a display 160 to show an error message. Preferably, controller 170 is further configured to deactivate the drive motor 128a or 128b in step a4).

In this case, if rotation in both the first and second rotational directions R1 and R2 results in a jam that cannot be cleared without the drive motor 128a or 128b exceeding the pre-set current limit, the product dispenser 110 will need attention from a user or technician in order to clear the jam.

In another aspect, the controller 170 is further configured to: a5) determine a reverse run time for step a2), and a6) if the reverse run time exceeds a pre-set limit, reverse the rotational direction of the drive motor 128a or 128b to rotate the rotatable drum 24a or 24b in an opposite rotational direction R1 or R2 from step a2). In this case, preferably the controller 170 continues to monitor whether the target weight of the product being dispensed has been reached and deactivates the drive motor 128a or 128b and dispenses product once the target weight is reached. Additional logic can be employed to the extent that continued reversing of the drive motor 128a or 128b does not result in the target weight of the product being dispensed being reached without the current being drawn by the drive motor 128a or 128b exceeding the current limit, which could indicate a product bridge or lack of product which cannot be addressed by continuing reversal of the drive motor 128a or 128b.

Upon reversal of the drive motor 128a or 128b, the controller 170 is further configured to detect the current to the drive motor and a7) if the current to the drive motor 128a or 128b exceeds a pre-set limit, to signal the display 160 to show the error message. Here again, the controller 170 is preferably further configured to deactivate the drive motor in step a7).

In each case, the change in the rotational direction R1 or R2 of the rotatable drum re-distributes product at the bottom of the storage hopper 20a, 20b that is in contact with a top of the rotatable drum 24a, 24b to help prevent product bridging and jams.

Referring now to Figure 7, an exemplary logic flow diagram for the controller 170 is shown. Here, upon the start of a dispensing cycle as indicated at 180, the drive motor 128a or 128b is rotated in a first rotational direction R1 (opposite the rotation directional R2 from the prior dispense cycle) as indicated at 181. Additionally, the controller 170 preferably includes the option of monitoring the current being drawn by the drive motor 128a or 128b as indicated at 181.

As indicated at 182, if the current does not exceed the current limit, and the target weight is reached as indicated at 183, the motor 128a or 128b is stopped as indicated at 184 and the product is dispensed via the dump doors 32a, 32b being activated by the controller 170. If the target weight is not reached, the cycle continues as indicated at 181 and 182 until the target weight is reached as indicated at 183. The logic can also include a maximum dispense time, which if exceeded, results in the motor 128a or 128b being deactivated and an error message displayed.

To the extent that there is a current draw to the drive motor 128a, 128b that exceeds the current limit, as indicated at 185, the controller 170 causes the drive motor 128a or 128b to rotate in the opposite (here second) rotation directional R2 to eliminate or break up the product jam. As indicated at 186, if the reverse rotational direction current to the drive motor 128a or 128b also exceeds the current limit, a display error is displayed on the display 160 as indicated at 187, and preferably the controller 170 deactivates the drive motor 128a or 128b.

To the extent that the reverse rotational direction current to the drive motor 128a or 128b does not exceed the current limit, as indicated at 188, the controller 170 determines if the target weight has been reached. To the extent that the target weight is reached, the controller 170 can stop the drive motor 128a or 128b as indicated at 184 and dispense the product. If the target weight is not reached and the reversed running time has not expired, as indicated at 189, the cycle can continue with the drive motor 128a or 128b running in the opposite (here second) rotational direction R2.

As indicated at 190, if the reverse running time has been exceeded, the controller 170 can switch the drive motor 128a or 128b to rotate in the first rotational direction R1 again. The controller 170 continues to monitor the current being drawn and if this does not exceed a current limit, as indicated at 191, the cycle continues until either the target weight is reached at 183 or 188, or the current limit is exceeded as indicated at 186 or 191 such that the controller 170 displays the error message as indicated at 187 and stops the motor 128a or 128b. The logic for the controller 170 may also include an overall timing out for the dispensing cycle, which, if exceeded, signals the display 160 with an error message or otherwise indicates that user attention is needed.

It will be appreciated that the foregoing is presented by way of illustration only and not by way of any limitation. It is contemplated that various alternatives and modifications may be made to the described embodiments. Having thus described the present invention in detail, it is to be appreciated and will be apparent to those skilled in the art that many physical changes, only a few of which are exemplified in the detailed description of the invention, could be made. It is also to be appreciated that numerous embodiments incorporating only part of the preferred embodiment are possible. The present embodiment and optional configurations are therefore to be considered in all respects as exemplary and/or illustrative and not restrictive.

## Claims

1. A product dispenser (10, 110), comprising:
a storage hopper (20a, 20b);
a rotatable drum (24a, 24b) having paddles on a periphery thereof located at a bottom of the storage hopper (20a, 20b), and a drive motor (128a, 128b) connected to the rotatable drum (24a, 24b);
a weighing/dispensing assembly (30a, 30b) located beneath the rotatable drum (24a, 24b), the weighing/dispensing assembly (30a, 30b) includes a load cell (46) and further includes or is connected to one or more dump doors on which product (11) to be dispensed is adapted to accumulate, the load cell (46) detecting a weight of the product (11) to be dispensed as it accumulates on the one or more dump doors;
a controller (170) configured to: a) actuate the drive motor (128a, 128b) to rotate the rotatable drum (24a, 24b) in a rotational direction at a start of a dispensing cycle, b) receive a signal from the load cell (46) and determine a weight of the product (11) accumulating on the one or more dump doors, c) determine if a target weight is reached based on the signal from the load cell (46) of the weight of the product (11) accumulating on the one or more dump doors, d) deactivate the drive motor (128a, 128b) upon the target weight being detected, e) open the one or more dump doors such that accumulated product (11) is dispensed;
**characterized in that**
the controller (170) is further configured to: f) upon a start of a next dispensing cycle, actuate the drive motor (128a, 128b) to rotate the rotatable drum (24a, 24b) in a rotational direction, opposite to the rotational direction of the drive motor (128a, 128b) in step d), and g) repeat steps b) - e).

2. The product dispenser (10, 110) of claim 1, wherein the controller (170) is further configured to: a1) detect a current to the drive motor (128a, 128b), and a2) if the current to the drive motor (128a, 128b) exceeds a pre-set limit, reverse the rotational direction of the drive motor (128a, 128b) and the rotatable drum (24a, 24b).

3. The product dispenser (10, 110) of claim 2, wherein the controller (170) is further configured to: a3) detect a reverse rotational direction current to the drive motor (128a, 128b), and a4) if the reverse rotational direction current to the drive motor (128a, 128b) exceeds a pre-set limit, signal a display (160) to show an error message.

4. The product dispenser (10, 110) of claim 2, wherein the controller (170) is further configured to: deactivate the drive motor (128a, 128b) in step a4).

5. The product dispenser (10, 110) of claim 2, wherein the controller (170) is further configured to: a5) determine a reverse run time for step a2), and a6) if the reverse run time exceeds a preset limit, reverse the rotational direction of the drive motor (128a, 128b) to rotate the rotatable drum (24a, 24b) in an opposite rotational direction from step a2).

6. The product dispenser (10, 110) of claim 5, wherein the controller (170) is further configured to: detect the current to the drive motor (128a, 128b), and a7) if the current to the drive motor (128a, 128b) exceeds a pre-set limit, signal a display (160) to show an error message.

7. The product dispenser (10, 110) of claim 6, wherein the controller (170) is further configured to: deactivate the drive motor (128a, 128b) in step a7).

8. The product dispenser (10, 110) of claim 1, wherein a change in the rotational direction of the rotatable drum re-distributes product at a bottom of the storage hopper (20a, 20b) that is in contact with a top of the rotatable drum (24a, 24b).

## Patentansprüche

1. Produktspender (10, 110), umfassend:
einen Vorratstrichter (20a, 20b);
eine drehbare Trommel (24a, 24b), die Schaufeln an einem Umfang davon aufweist, welche sich an einer Unterseite des Vorratstrichters (20a, 20b) befindet, und einen Antriebsmotor (128a, 128b), welcher mit der drehbaren Trommel (24a, 24b) verbunden ist;
eine Wiege-/Spendenordnung (30a, 30b), welche sich unterhalb der drehbaren Trommel (24a, 24b) befindet, wobei die Wiege-/Spendeanordnung (30a, 30b) eine Wägezelle (46) beinhaltet und weiter eine oder mehrere Kippklappen beinhaltet oder mit diesen verbunden ist, auf welchen das zu spendende Produkt (11) angepasst ist, sich anzusammeln, wobei die Wägezelle (46) ein Gewicht des zu spendenden Produkts (11) erkennt, wenn es sich auf der einen oder mehreren Kippklappen ansammelt;
eine Steuereinheit (170), die konfiguriert ist, um: a) den Antriebsmotor (128a, 128b) zu betätigen, um die drehbare Trommel (24a, 24b) zu Beginn eines Spendenzyklus in eine Drehrichtung zu drehen, b) ein Signal von der Wägezelle (46) zu empfangen und ein Gewicht des Produkts (11) zu bestimmen, das sich auf der einen oder mehreren Kippklappen ansammelt, c) basierend auf dem Signal von der Wägezelle (46) des Gewichts des Produkts (11), das sich auf der einen oder mehreren Kippklappen ansammelt, zu bestimmen, ob ein Zielgewicht erreicht ist, d) den Antriebsmotor (128a, 128b) zu deaktivieren, wenn das Zielgewicht erkannt worden ist, e) die eine oder mehrere Kippklappen zu öffnen, sodass das angesammelte Produkt (11) gespendet wird;
**dadurch gekennzeichnet, dass**
die Steuereinheit (170) weiter konfiguriert ist, um: f) beim Beginn eines nächsten Spendenzyklus den Antriebsmotor (128a, 128b) zu betätigen, um die drehbare Trommel (24a, 24b) in einer Drehrichtung zu drehen, die der Drehrichtung des Antriebsmotors (128a, 128b) in Schritt d) entgegengesetzt ist, und g) die Schritte b) - e) zu wiederholen.

2. Produktspender (10, 110) nach Anspruch 1, wobei die Steuereinheit (170) weiter konfiguriert ist, um: a1) einen Strom zum Antriebsmotor (128a, 128b) zu erkennen, und a2) wenn der Strom zum Antriebsmotor (128a, 128b) eine voreingestellte Grenze überschreitet, die Drehrichtung des Antriebsmotors (128a, 128b) und der drehbaren Trommel (24a, 24b) umzukehren.

3. Produktspender (10, 110) nach Anspruch 2, wobei die Steuereinheit (170) weiter konfiguriert ist, um: a3) einen Strom in umgekehrter Drehrichtung zum Antriebsmotor (128a, 128b) zu erkennen, und a4) wenn der Strom in umgekehrter Drehrichtung zum Antriebsmotor (128a, 128b) eine voreingestellte Grenze überschreitet, einer Anzeige (160) zu signalisieren, eine Fehlermeldung anzuzeigen.

4. Produktspender (10, 110) nach Anspruch 2, wobei die Steuereinheit (170) weiter konfiguriert ist, um: den Antriebsmotor (128a, 128b) in Schritt a4) zu deaktivieren.

5. Produktspender (10, 110) nach Anspruch 2, wobei die Steuereinheit (170) weiter konfiguriert ist, um: a5) eine Rückwärtslaufzeit für Schritt a2) zu bestimmen, und a6) wenn die Rückwärtslaufzeit eine voreingestellte Grenze überschreitet, die Drehrichtung des Antriebsmotors (128a, 128b) umzukehren, um die drehbare Trommel (24a, 24b) in eine zu Schritt a2) entgegengesetzte Drehrichtung zu drehen.

6. Produktspender (10, 110) nach Anspruch 5, wobei die Steuereinheit (170) weiter konfiguriert ist, um: den Strom zum Antriebsmotor (128a, 128b) zu erkennen, und a7) wenn der Strom zum Antriebsmotor (128a, 128b) eine voreingestellte Grenze überschreitet, einer Anzeige (160) zu signalisieren, eine Fehlermeldung anzuzeigen.

7. Produktspender (10, 110) nach Anspruch 6, wobei die Steuereinheit (170) weiter konfiguriert ist, um: den Antriebsmotor (128a, 128b) in Schritt a7) zu deaktivieren.

8. Produktspender (10, 110) nach Anspruch 1, wobei eine Änderung der Drehrichtung der drehbaren Trommel das Produkt an einem Boden des Vorratstrichters (20a, 20b), der mit einer Oberseite der drehbaren Trommel (24a, 24b) in Kontakt steht, umverteilt.

## Revendications

1. Distributeur de produit (10, 110), comprenant :
une trémie de stockage (20a, 20b) ;
un tambour rotatif (24a, 24b) présentant des palettes sur une périphérie de celui-ci, situées au niveau d'un fond de la trémie de stockage (20a, 20b), et un moteur d'entraînement (128a, 128b) relié au tambour rotatif (24a, 24b) ;
un ensemble de pesée/distribution (30a, 30b) situé sous le tambour rotatif (24a, 24b), l'ensemble de pesée/distribution (30a, 30b) inclut une cellule de charge (46) et inclut en outre, ou est relié à, une ou plusieurs portes de décharge sur lesquelles le produit (11) à distribuer est conçu pour s'accumuler, la cellule de charge (46) détectant un poids du produit (11) à distribuer à mesure qu'il s'accumule sur les une ou plusieurs portes de décharge ;
un dispositif de commande (170) configuré pour: a) actionner le moteur d'entraînement (128a, 128b) pour faire tourner le tambour rotatif (24a, 24b) dans un sens de rotation au début d'un cycle de distribution, b) recevoir un signal de la cellule de charge (46) et déterminer un poids du produit (11) s'accumulant sur les une ou plusieurs portes de décharge, c) déterminer si un poids cible est atteint sur la base du signal de la cellule de charge (46) du poids du produit (11) s'accumulant sur les une ou plusieurs portes de décharge, d) désactiver le moteur d'entraînement (128a, 128b) lorsque le poids cible est détecté, e) ouvrir les une ou plusieurs portes de décharge de telle sorte que le produit accumulé (11) soit distribué ;
**caractérisé en ce que**
le dispositif de commande (170) est en outre configuré pour : f) au démarrage d'un cycle de distribution suivant, actionner le moteur d'entraînement (128a, 128b) pour faire tourner le tambour rotatif (24a, 24b) dans un sens de rotation opposé au sens de rotation du moteur d'entraînement (128a, 128b) à l'étape d), et g) répéter les étapes b)-e).

2. Distributeur de produit (10, 110) selon la revendication 1, dans lequel le dispositif de commande (170) est en outre configuré pour : a1) détecter un courant vers le moteur d'entraînement (128a, 128b), et a2) si le courant vers le moteur d'entraînement (128a, 128b) dépasse une limite prédéfinie, inverser le sens de rotation du moteur d'entraînement (128a, 128b) et du tambour rotatif (24a, 24b).

3. Distributeur de produit (10, 110) selon la revendication 2, dans lequel le dispositif de commande (170) est en outre configuré pour : a3) détecter un courant de sens de rotation inverse vers le moteur d'entraînement (128a, 128b), et a4) si le courant de sens de rotation inverse vers le moteur d'entraînement (128a, 128b) dépasse une limite prédéfinie, envoyer un signal à un dispositif d'affichage (160) pour afficher un message d'erreur.

4. Distributeur de produit (10, 110) selon la revendication 2, dans lequel le dispositif de commande (170) est en outre configuré pour : désactiver le moteur d'entraînement (128a, 128b) à l'étape a4).

5. Distributeur de produit (10, 110) selon la revendication 2, dans lequel le dispositif de commande (170) est en outre configuré pour : a5) déterminer un temps de fonctionnement inverse pour l'étape a2), et a6) si le temps de fonctionnement inverse dépasse une limite prédéfinie, inverser le sens de rotation du moteur d'entraînement (128a, 128b) pour faire tourner le tambour rotatif (24a, 24b) dans un sens de rotation opposé à celui de l'étape a2).

6. Distributeur de produit (10, 110) selon la revendication 5, dans lequel le dispositif de commande (170) est en outre configuré pour : détecter le courant vers le moteur d'entraînement (128a, 128b), et a7) si le courant vers le moteur d'entraînement (128a, 128b) dépasse une limite prédéfinie, envoyer un signal à un dispositif d'un affichage (160) pour afficher un message d'erreur.

7. Distributeur de produit (10, 110) selon la revendication 6, dans lequel le dispositif de commande (170) est en outre configuré pour : désactiver le moteur d'entraînement (128a, 128b) à l'étape a7).

8. Distributeur de produit (10, 110) selon la revendication 1, dans lequel un changement du sens de rotation du tambour rotatif redistribue le produit au niveau d'un fond de la trémie de stockage (20a, 20b) qui est en contact avec un sommet du tambour rotatif (24a, 24b).
